# EUROPEAN PATENT APPLICATION

(11) **EP 3 783 214 A1**
(43) Date of publication of application: **24.02.2021**
(21) Application number: 19192803.5
(22) Date of filing: 21.08.2019
(51) Int. Cl.: F02C 7/36, F02K 3/06

(54) **GAS TURBINE ENGINE**

(71) Applicant: Rolls-Royce Deutschland Ltd & Co KG, 15827 Blankenfelde-Mahlow (DE)
(72) Inventor: Sánchez Timón, Jorge, 15827 Blankefelde-Mahlow (DE); Muorah, Jude, 15827 Blankenfelde-Mahlow (DE); Barker, Thomas, 15827 Blankefelde-Mahlow (DE)
(74) Representative: Schmidt, Martin Michael

(57) **Abstract**

A gas turbine engine (10) of an aircraft comprising at least one turbine, at least one compressor, at least one fan and a gearbox (30) is described. The gearbox (30) comprises a gear shaft (34), which is coupled by a spline joint (42) to at least one engine shaft (36), which engine shaft (36) is connected to the turbine, the compressor and/or the fan. The gear shaft (34) is coupled to the engine shaft (36) in axial direction by bolts (43).

## Description

The present disclosure relates to a gas turbine engine comprising at least one turbine, at least one compressor, and at least one fan.

A typical gas turbine engine includes a fan section, a compressor section, a combustor section and a turbine section. Air entering the compressor section is compressed and delivered into the combustion section where it is mixed with fuel and ignited to generate a high-speed exhaust gas flow. The high-speed exhaust gas flow expands through the turbine section to drive the compressor and the fan section. The compressor section typically includes low and high pressure compressors, and the turbine section includes low and high pressure turbines. It is well known that the turbine drives the fan via an epicyclical gear assembly.

In engine architectures incorporating such a gearbox, a shaft driven by one of the turbine sections provides an input to the epicyclical gear assembly that drives the fan section at a reduced speed such that both the turbine section and the fan section can rotate at closer to optimal speeds.

For this purpose a shaft of the epicyclical gear assembly is coupled to a so called fan shaft via a spline joint, which transmits the large output torque by involute splines. Furthermore, only little axial thrust has to be transmitted. A ring nut to axially restrain the spline joint at this diameter is difficult to assemble, costly and characterised by high component weight.

It is the object of the present disclosure to provide a gas turbine engine of the kind as it is mentioned above to overcome the known disadvantages.

This object is achieved through a gas turbine engine with the features of claim 1.

As noted elsewhere herein, the present disclosure relates to a gas turbine engine of an aircraft. Such a gas turbine engine may include at least one turbine, at least one compressor, at least one fan and a gearbox, in particular a planetary gearbox. The gear box may comprise a gear shaft, in particular a planetary gear shaft, which is coupled by a spline joint to at least one engine shaft which is connected to the turbine, the compressor and/or the fan. The gear shaft is coupled to the engine shaft in axial direction by bolts.

The connection of the shafts via the bolts is easier to assemble compared to a shaft nut, and is characterised by a lower component weight and lower manufacturing costs.

The spline joint may be designed to transmit torque between the shafts only through the splines. Then, a relatively low axial load may be transmitted through the bolted flanges.

In a constructively simple embodiment of the gas turbine engine according to the present disclosure both, the gear shaft and the engine shaft may be designed with at least one flange. The bolts may be guided through holes in the flanges, and the shafts may be connected to each other in the area of their flanges via the bolts.

The gear shaft of the gearbox may be a ring gear, a sun gear and/or a planet carrier.

A spline shaft profile of the gear shaft may be formed on a radial inner surface of the gear shaft which is at least partly designed as a hollow shaft, and a spline shaft profile of the engine shaft, which may be engaged with the spline shaft profile of the gear shaft, may be provided on an outer surface of the engine shaft.

Alternatively thereto a spline shaft profile of the engine shaft may be formed on a radial inner surface of the engine shaft which is at least partly designed as a hollow shaft, and a spline shaft profile of the gear shaft, which is engaged with the spline shaft profile of the engine shaft, may be provided on an outer surface of the gear shaft.

In a further embodiment the gear shaft and the engine shaft are in contact with each other in the areas of contact surfaces facing each other in radial direction, whereby the contact surfaces may be formed on the shafts in the axial extension of the spline shaft connection before and after the spline joint.

Then, undesirable tilting between the shafts can be easily avoided during operation of the gas turbine engine. Further, concentricity is ensured.

It is also possible that outer diameters of the bolts and inner diameters of bores of the flanges, through which the bolts are guided, are matching to each other in such a way that outer surfaces of the bolts and inner surfaces of the bores are at least circumferentially spaced apart to each other when flanks of the spline shaft profiles of the shafts are in contact to each other.

With other words, clearances between bolt shanks and bolt holes may be dimensioned such to ensure that spline teeth always engage, for both normal and reverse torque, before at least one of the bolt shanks gets in contact with the respective bolt hole. This is achieved by ensuring under all tolerance conditions that the distances between the bolt shanks with their possible threads and the bolt holes are greater than the distances between the flanks of the teeth of the spline shaft profiles of the shafts.

A clamping force provided between the bolted flanges may allow the joint to circumferentially slips under torque so that the spline teeth can get in contact in the area of their flanks with each other.

Moreover, a relationship between the number of bolts and the number of spline teeth of the spline shaft profiles of the shafts may be such that multiple circumferential positions between the gear shaft and the shaft are possible at assembly.

If anti-score plates are provided, which are fastened by the bolts, unbalances can be compensated in a constructively simple way.

In a further embodiment of the gas turbine engine according to the present disclosure some bolts may be used to fasten a bearing inner ring to the flange of the engine shaft and/or to the flange of the gear shaft.

An outer diameter of the flange of the engine shaft and/or of the flange of the gear shaft varies in a further embodiment of the gas turbine engine according to the present disclosure at least approximately sinusoidally in circumferential direction.

An inner diameter of the bearing inner ring may vary at least approximately sinusoidally in the circumferential direction.

That means that the flange of the engine shaft and/or the gear shaft has in circumferential direction alternately areas with larger outer diameters and areas with smaller outer diameters. The outer side of the flange is at least approximately wave-shaped in the circumferential direction. This makes it possible to axially arrange a flange of an inner bearing ring in the same plane as the flange of the engine shaft and/or the gear shaft in a way that is favourable in terms of installation space. Herewith, areas of the flange of the inner bearing ring whose inner diameters are smaller than adjacent areas of the flange whose inner diameters are larger are arranged in areas of the flange of the shaft whose outer diameters are smaller.

In a further embodiment of the gas turbine engine according to the present disclosure at least one shaft is provided, which is connecting the turbine directly to the compressor, and which can be the engine shaft or a further shaft of the gas turbine engine.

The gas turbine engine may comprise an engine core, which comprise said at least one turbine, the at least one compressor, and the at least one shaft connecting the turbine directly to the compressor. The fan may be located upstream of the engine core and comprises a plurality of fan blades. The gearbox receives an input from said at least one shaft which is connected by the spline joint and the bolts to the gear shaft, and outputs drive to the fan so as to drive the fan shaft at a lower rotational speed than said shaft.

In a further embodiment of the gas turbine engine according to the present disclosure the turbine is a first turbine, the compressor is a first compressor, and the said at least one shaft is a first core shaft. The engine core further comprises a second turbine, a second compressor, and a second core shaft connecting the second turbine to the second compressor. The second turbine, the second compressor, and the second core shaft are arranged to rotate at a higher rotational speed than the first core shaft.

The gas turbine engine as described and claimed herein may have any suitable general architecture. For example, the gas turbine engine may have any desired number of shafts that connect turbines and compressors, for example one, two or three shafts. Purely by way of example, the turbine connected to the core shaft may be a first turbine, the compressor connected to the core shaft may be a first compressor, and the core shaft may be a first core shaft. The engine core may further comprise a second turbine, a second compressor, and a second core shaft connecting the second turbine to the second compressor. The second turbine, second compressor, and second core shaft may be arranged to rotate at a higher rotational speed than the first core shaft.

In such an arrangement, the second compressor may be positioned axially downstream of the first compressor. The second compressor may be arranged to receive (for example directly receive, for example via a generally annular duct) flow from the first compressor.

The gearbox may be arranged to be driven by the core shaft that is configured to rotate (for example in use) at the lowest rotational speed (for example the first core shaft in the example above). For example, the gearbox may be arranged to be driven only by the core shaft that is configured to rotate (for example in use) at the lowest rotational speed (for example only be the first core shaft, and not the second core shaft, in the example above). Alternatively, the gearbox may be arranged to be driven by any one or more shafts, for example the first and/or second shafts in the example above.

In any gas turbine engine as described and claimed herein, a combustor may be provided axially downstream of the fan and compressor(s). For example, the combustor may be directly downstream of (for example at the exit of) the second compressor, where a second compressor is provided. By way of further example, the flow at the exit to the combustor may be provided to the inlet of the second turbine, where a second turbine is provided. The combustor may be provided upstream of the turbine(s).

The or each compressor (for example the first compressor and second compressor as described above) may comprise any number of stages, for example multiple stages. Each stage may comprise a row of rotor blades and a row of stator vanes, which may be variable stator vanes (in that their angle of incidence may be variable). The row of rotor blades and the row of stator vanes may be axially offset from each other.

The or each turbine (for example the first turbine and second turbine as described above) may comprise any number of stages, for example multiple stages. Each stage may comprise a row of rotor blades and a row of stator vanes. The row of rotor blades and the row of stator vanes may be axially offset from each other.

Each fan blade may be defined as having a radial span extending from a root (or hub) at a radially inner gas-washed location, or 0% span position, to a tip at a 100% span position. The ratio of the radius of the fan blade at the hub to the radius of the fan blade at the tip may be less than (or on the order of) any of: 0.4, 0.39, 0.38 0.37, 0.36, 0.35, 0.34, 0.33, 0.32, 0.31, 0.3, 0.29, 0.28, 0.27, 0.26, or 0.25. The ratio of the radius of the fan blade at the hub to the radius of the fan blade at the tip may be in an inclusive range bounded by any two of the values in the previous sentence (i.e. the values may form upper or lower bounds). These ratios may commonly be referred to as the hub-to-tip ratio. The radius at the hub and the radius at the tip may both be measured at the leading edge (or axially forward most) part of the blade. The hub-to-tip ratio refers, of course, to the gas-washed portion of the fan blade, i.e. the portion radially outside any platform.

The radius of the fan may be measured between the engine centreline and the tip of a fan blade at its leading edge. The fan diameter (which may simply be twice the radius of the fan) may be greater than (or on the order of) any of: 250 cm (around 100 inches), 260 cm, 270 cm (around 105 inches), 280 cm (around 110 inches), 290 cm (around 115 inches), 300 cm (around 120 inches), 310 cm, 320 cm (around 125 inches), 330 cm (around 130 inches), 340 cm (around 135 inches), 350cm, 360cm (around 140 inches), 370 cm (around 145 inches), 380 (around 150 inches) cm or 390 cm (around 155 inches). The fan diameter may be in an inclusive range bounded by any two of the values in the previous sentence (i.e. the values may form upper or lower bounds).

The rotational speed of the fan may vary in use. Generally, the rotational speed is lower for fans with a higher diameter. Purely by way of non-limitative example, the rotational speed of the fan at cruise conditions may be less than 2500 rpm, for example less than 2300 rpm. Purely by way of further non-limitative example, the rotational speed of the fan at cruise conditions for an engine having a fan diameter in the range of from 250 cm to 300 cm (for example 250 cm to 280 cm) may be in the range of from 1700 rpm to 2500 rpm, for example in the range of from 1800 rpm to 2300 rpm, for example in the range of from 1900 rpm to 2100 rpm. Purely by way of further non-limitative example, the rotational speed of the fan at cruise conditions for an engine having a fan diameter in the range of from 320 cm to 380 cm may be in the range of from 1200 rpm to 2000 rpm, for example in the range of from 1300 rpm to 1800 rpm, for example in the range of from 1400 rpm to 1600 rpm.

In use of the gas turbine engine, the fan (with associated fan blades) rotates about a rotational axis. This rotation results in the tip of the fan blade moving with a velocity Uₜᵢₚ. The work done by the fan blades 13 on the flow results in an enthalpy rise dH of the flow. A fan tip loading may be defined as dH/Uₜᵢₚ², where dH is the enthalpy rise (for example the 1-D average enthalpy rise) across the fan and Uₜᵢₚ is the (translational) velocity of the fan tip, for example at the leading edge of the tip (which may be defined as fan tip radius at leading edge multiplied by angular speed). The fan tip loading at cruise conditions may be greater than (or on the order of) any of: 0.3, 0.31, 0.32, 0.33, 0.34, 0.35, 0.36, 0.37, 0.38, 0.39 or 0.4 (all units in this paragraph being Jkg⁻¹K⁻¹/(ms⁻¹)²). The fan tip loading may be in an inclusive range bounded by any two of the values in the previous sentence (i.e. the values may form upper or lower bounds).

Gas turbine engines in accordance with the present disclosure may have any desired bypass ratio, where the bypass ratio is defined as the ratio of the mass flow rate of the flow through the bypass duct to the mass flow rate of the flow through the core at cruise conditions. In some arrangements the bypass ratio may be greater than (or on the order of) any of the following: 10, 10.5, 11, 11.5, 12, 12.5, 13, 13.5, 14, 14.5, 15, 15.5, 16, 16.5, or 17. The bypass ratio may be in an inclusive range bounded by any two of the values in the previous sentence (i.e. the values may form upper or lower bounds). The bypass duct may be substantially annular. The bypass duct may be radially outside the core engine. The radially outer surface of the bypass duct may be defined by a nacelle and/or a fan case.

The overall pressure ratio of a gas turbine engine as described and/or claimed herein may be defined as the ratio of the stagnation pressure upstream of the fan to the stagnation pressure at the exit of the highest pressure compressor (before entry into the combustor). By way of non-limitative example, the overall pressure ratio of a gas turbine engine as described and/or claimed herein at cruise may be greater than (or on the order of) any of the following: 35, 40, 45, 50, 55, 60, 65, 70, 75. The overall pressure ratio may be in an inclusive range bounded by any two of the values in the previous sentence (i.e. the values may form upper or lower bounds).

Specific thrust of an engine may be defined as the net thrust of the engine divided by the total mass flow through the engine. At cruise conditions, the specific thrust of an engine described and/or claimed herein may be less than (or on the order of) any of the following: 110 Nkg⁻¹s, 105 Nkg⁻¹s, 100 Nkg⁻¹s, 95 Nkg⁻¹s, 90 Nkg⁻¹s, 85 Nkg⁻¹s or 80 Nkg⁻¹s. The specific thrust may be in an inclusive range bounded by any two of the values in the previous sentence (i.e. the values may form upper or lower bounds). Such engines may be particularly efficient in comparison with conventional gas turbine engines.

A gas turbine engine as described and claimed herein may have any desired maximum thrust. Purely by way of non-limitative example, a gas turbine as described and/or claimed herein may be capable of producing a maximum thrust of at least (or on the order of) any of the following: 160kN, 170kN, 180kN, 190kN, 200kN, 250kN, 300kN, 350kN, 400kN, 450kN, 500kN, or 550kN. The maximum thrust may be in an inclusive range bounded by any two of the values in the previous sentence (i.e. the values may form upper or lower bounds). The thrust referred to above may be the maximum net thrust at standard atmospheric conditions at sea level plus 15 °C (ambient pressure 101.3kPa, temperature 30 °C), with the engine static.

In use, the temperature of the flow at the entry to the high pressure turbine may be particularly high. This temperature, which may be referred to as TET, may be measured at the exit to the combustor, for example immediately upstream of the first turbine vane, which itself may be referred to as a nozzle guide vane. At cruise, the TET may be at least (or on the order of) any of the following: 1400K, 1450K, 1500K, 1550K, 1600K or 1650K. The TET at cruise may be in an inclusive range bounded by any two of the values in the previous sentence (i.e. the values may form upper or lower bounds). The maximum TET in use of the engine may be, for example, at least (or on the order of) any of the following: 1700K, 1750K, 1800K, 1850K, 1900K, 1950K or 2000K. The maximum TET may be in an inclusive range bounded by any two of the values in the previous sentence (i.e. the values may form upper or lower bounds). The maximum TET may occur, for example, at a high thrust condition, for example at a maximum take-off (MTO) condition.

A fan blade and/or aerofoil portion of a fan blade described herein may be manufactured from any suitable material or combination of materials. For example at least a part of the fan blade and/or aerofoil may be manufactured at least in part from a composite, for example a metal matrix composite and/or an organic matrix composite, such as carbon fibre. By way of further example at least a part of the fan blade and/or aerofoil may be manufactured at least in part from a metal, such as a titanium based metal or an aluminium based material (such as an aluminium-lithium alloy) or a steel based material. The fan blade may comprise at least two regions manufactured using different materials. For example, the fan blade may have a protective leading edge, which may be manufactured using a material that is better able to resist impact (for example from birds, ice or other material) than the rest of the blade. Such a leading edge may, for example, be manufactured using titanium or a titanium-based alloy. Thus, purely by way of example, the fan blade may have a carbon-fibre or aluminium based body (such as an aluminium lithium alloy) with a titanium leading edge.

A fan as described herein may comprise a central portion, from which the fan blades may extend, for example in a radial direction. The fan blades may be attached to the central portion in any desired manner. For example, each fan blade may comprise a fixture which may engage a corresponding slot in the hub (or disc). Purely by way of example, such a fixture may be in the form of a dovetail that may slot into and/or engage a corresponding slot in the hub/disc in order to fix the fan blade to the hub/disc. By way of further example, the fan blades maybe formed integrally with a central portion. Such an arrangement may be referred to as a blisk or a bling. Any suitable method may be used to manufacture such a blisk or bling. For example, at least a part of the fan blades may be machined from a block and/or at least part of the fan blades may be attached to the hub/disc by welding, such as linear friction welding.

The gas turbine engines described and claimed herein may or may not be provided with a variable area nozzle (VAN). Such a variable area nozzle may allow the exit area of the bypass duct to be varied in use. The general principles of the present disclosure may apply to engines with or without a VAN.

The fan of a gas turbine as described and claimed herein may have any desired number of fan blades, for example 16, 18, 20, or 22 fan blades.

As used herein, cruise conditions may mean cruise conditions of an aircraft to which the gas turbine engine is attached. Such cruise conditions may be conventionally defined as the conditions at mid-cruise, for example the conditions experienced by the aircraft and/or engine at the midpoint (in terms of time and/or distance) between top of climb and start of decent.

Purely by way of example, the forward speed at the cruise condition may be any point in the range of from Mach 0.7 to 0.9, for example 0.75 to 0.85, for example 0.76 to 0.84, for example 0.77 to 0.83, for example 0.78 to 0.82, for example 0.79 to 0.81, for example on the order of Mach 0.8, on the order of Mach 0.85 or in the range of from 0.8 to 0.85. Any single speed within these ranges may be the cruise condition. For some aircraft, the cruise conditions may be outside these ranges, for example below Mach 0.7 or above Mach 0.9.

Purely by way of example, the cruise conditions may correspond to standard atmospheric conditions at an altitude that is in the range of from 10000m to 15000m, for example in the range of from 10000m to 12000m, for example in the range of from 10400m to 11600m (around 38000 ft), for example in the range of from 10500m to 11500m, for example in the range of from 10600m to 11400m, for example in the range of from 10700m (around 35000 ft) to 11300m, for example in the range of from 10800m to 11200m, for example in the range of from 10900m to 11100m, for example on the order of 11000m. The cruise conditions may correspond to standard atmospheric conditions at any given altitude in these ranges.

Purely by way of example, the cruise conditions may correspond to: a forward Mach number of 0.8; a pressure of 23000 Pa; and a temperature of -55 °C.

As used anywhere herein, "cruise" or "cruise conditions" may mean the aerodynamic design point. Such an aerodynamic design point (ADP) may correspond to the conditions, for example, one or more of the Mach Number, environmental conditions and thrust requirement, for which the fan is designed to operate. This may mean, for example, the conditions at which the fan or gas turbine engine is designed to have optimum efficiency.

In use, a gas turbine engine described and claimed herein may operate at the cruise conditions defined elsewhere herein. Such cruise conditions may be determined by the cruise conditions, for example the mid-cruise conditions, of an aircraft to which at least one (for example 2 or 4) gas turbine engine may be mounted in order to provide propulsive thrust.

The skilled person will appreciate that except where mutually exclusive, a feature or parameter described in relation to any one of the above aspects may be applied to any other aspect. Furthermore, except where mutually exclusive, any feature or parameter described herein may be applied to any aspect and/or combined with any other feature or parameter described herein.

Embodiments will now be described by way of example only, with reference to the Figures, in which:
Fig. 1 is a sectional side view of a gas turbine engine;
Fig. 2 is a close up sectional side view of an upstream portion of a gas turbine engine;
Fig. 3 is a partially cut-away view of a planetary gearbox for a gas turbine engine;
Fig. 4 a partial longitudinal sectional view of a shaft of the gas turbine engine according to Fig. 1, which is connected to a planet carrier of a planetary gear of the planetary gear box according to Fig. 3 via a bolted spline joint; and
Fig. 5 a three-dimensional partial view of the shaft, the planet carrier and a bearing connected thereto.

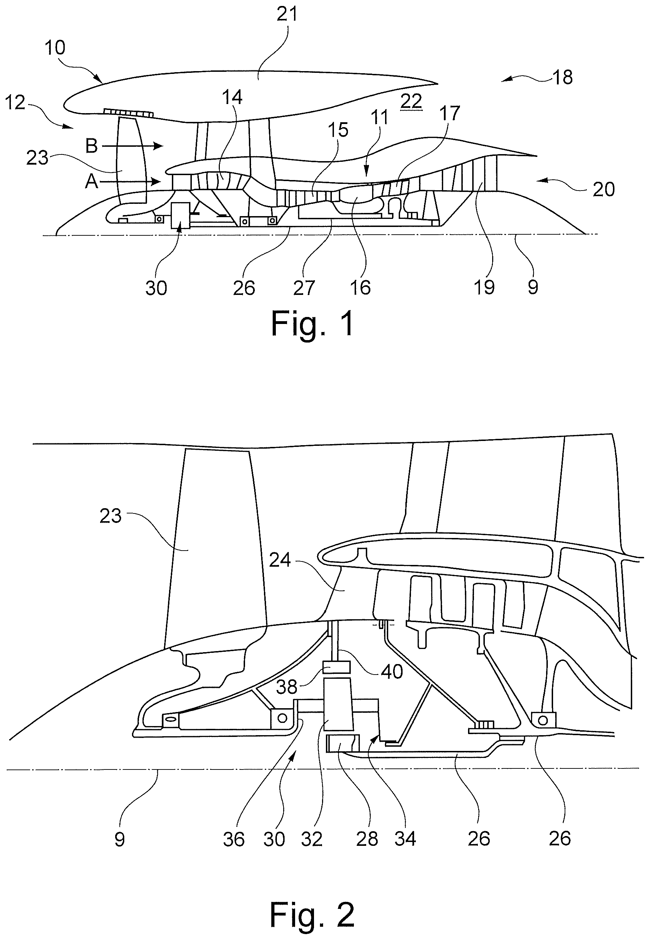

Fig. 1 illustrates a gas turbine engine 10 having a principal rotational axis 9. The engine 10 comprises an air intake 12 and a propulsive fan 23 that generates two airflows: a core airflow A and a bypass airflow B. The gas turbine engine 10 comprises a core 11 that receives the core airflow A. The engine core 11 comprises, in axial flow series, a low pressure compressor 14, a high-pressure compressor 15, combustion equipment 16, a high-pressure turbine 17, a low pressure turbine 19 and a core exhaust nozzle 20. A nacelle 21 surrounds the gas turbine engine 10 and defines a bypass duct 22 and a bypass exhaust nozzle 18. The bypass airflow B flows through the bypass duct 22. The fan 23 is attached to and driven by the low pressure turbine 19 via a shaft 26 and an epicyclic gearbox 30.

In use, the core airflow A is accelerated and compressed by the low pressure compressor 14 and directed into the high pressure compressor 15 where further compression takes place. The compressed air exhausted from the high pressure compressor 15 is directed into the combustion equipment 16 where it is mixed with fuel and the mixture is combusted. The resultant hot combustion products then expand through, and thereby drive, the high pressure and low pressure turbines 17, 19 before being exhausted through the nozzle 20 to provide some propulsive thrust. The high pressure turbine 17 drives the high pressure compressor 15 by a suitable interconnecting shaft 27. The fan 23 generally provides the majority of the propulsive thrust. The epicyclic gearbox 30 is a reduction gearbox.

An exemplary arrangement for a geared fan gas turbine engine 10 is shown in Fig. 2. The low pressure turbine 19 (see Fig. 1) drives the shaft 26, which is coupled to a sun wheel, or sun gear 28 of the epicyclic gear arrangement 30. Radially outwardly of the sun gear 28 and intermeshing therewith is a plurality of planet gears 32 that are coupled together by a planet carrier 34. The planet carrier 34 constrains the planet gears 32 to precess around the sun gear 28 in synchronicity whilst enabling each planet gear 32 to rotate about its own axis. The planet carrier 34 is coupled via a shaft 36 to the fan 23 in order to drive its rotation about the engine axis 9. Radially outwardly of the planet gears 32 and intermeshing therewith is an annulus or ring gear 38 that is coupled, via linkages 40, to a stationary supporting structure 24.

Note that the terms "low pressure turbine" and "low pressure compressor" as used herein may be taken to mean the lowest pressure turbine stages and lowest pressure compressor stages (i.e. not including the fan 23) respectively and/or the turbine and compressor stages that are connected together by the interconnecting shaft 26 with the lowest rotational speed in the engine (i.e. not including the gearbox output shaft that drives the fan 23). In some literature, the "low pressure turbine" and "low pressure compressor" referred to herein may alternatively be known as the "intermediate pressure turbine" and "intermediate pressure compressor". Where such alternative nomenclature is used, the fan 23 may be referred to as a first, or lowest pressure, compression stage.

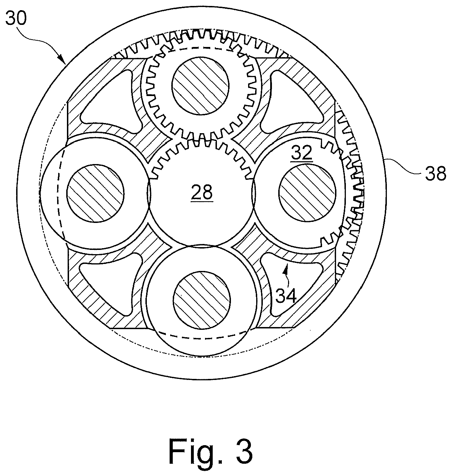

The planetary or epicyclic gearbox 30 is shown by way of example in greater detail in Fig. 3. Each of the sun gear 28, planet gears 32 and ring gear 38 comprise teeth about their periphery to intermesh with the other gears. However, for clarity only exemplary portions of the teeth are illustrated in Fig. 3. There are four planet gears 32 illustrated, although it will be apparent to the skilled reader that more or fewer planet gears 32 may be provided within the scope of the claimed invention. Practical applications of a planetary epicyclic gearbox generally comprise at least three planet gears 32.

The epicyclic gearbox 30 illustrated by way of example in Fig. 2 and Fig. 3 is of the planetary type, in that the planet carrier 34 is coupled to an output engine shaft 36, with the ring gear 38 fixed. However, any other suitable type of epicyclic gearbox 30 may be used. By way of further example, the epicyclic gearbox 30 may be a star arrangement, in which the planet carrier 34 is held fixed, with the ring (or annulus) gear 38 allowed to rotate. In such an arrangement the fan 23 is driven by the ring gear 38. By way of further alternative example, the gearbox 30 may be a differential gearbox in which the ring gear 38 and the planet carrier 34 are both allowed to rotate.

It will be appreciated that the arrangement shown in Fig. 2 and Fig. 3 is by way of example only, and various alternatives are within the scope of the present disclosure. Purely by way of example, any suitable arrangement may be used for locating the gearbox 30 in the engine 10 and/or for connecting the gearbox 30 to the engine 10. By way of further example, the connections (such as the shaft 36 and the linkage 40 in the Fig. 2 example) between the gearbox 30 and other parts of the engine 10 (such as the input shaft 26, the output shaft and the fixed structure 24) may have any desired degree of stiffness or flexibility. By way of further example, any suitable arrangement of the bearings between rotating and stationary parts of the engine (for example between the input and output shafts from the gearbox and the fixed structures, such as the gearbox casing) may be used, and the disclosure is not limited to the exemplary arrangement of Fig. 2. For example, where the gearbox 30 has a star arrangement (described above), the skilled person would readily understand that the arrangement of output and support linkages and bearing locations would typically be different to that shown by way of example in Fig. 2.

Accordingly, the present disclosure extends to a gas turbine engine having any arrangement of gearbox styles (for example star or planetary), support structures, input and output shaft arrangement, and bearing locations.

Optionally, the gearbox may drive additional and/or alternative components (e.g. the intermediate pressure compressor and/or a booster compressor).

Other gas turbine engines to which the present disclosure may be applied may have alternative configurations. For example, such engines may have an alternative number of compressors and/or turbines and/or an alternative number of interconnecting shafts. By way of further example, the gas turbine engine shown in Fig. 1 has a split flow nozzle 20, 22 meaning that the flow through the bypass duct 22 has its own nozzle that is separate to and radially outside the core engine nozzle 20. However, this is not limiting, and any aspect of the present disclosure may also apply to engines in which the flow through the bypass duct 22 and the flow through the core 11 are mixed, or combined, before (or upstream of) a single nozzle, which may be referred to as a mixed flow nozzle. One or both nozzles (whether mixed or split flow) may have a fixed or variable area. Whilst the described example relates to a turbofan engine, the disclosure may apply, for example, to any type of gas turbine engine, such as an open rotor (in which the fan stage is not surrounded by a nacelle) or turboprop engine, for example.

The geometry of the gas turbine engine 10, and components thereof, is defined by a conventional axis system, comprising an axial direction (which is aligned with the rotational axis 9), a radial direction (in the bottom-to-top direction in Fig. 1), and a circumferential direction (perpendicular to the page in the Fig. 1 view). The axial, radial and circumferential directions are mutually perpendicular.

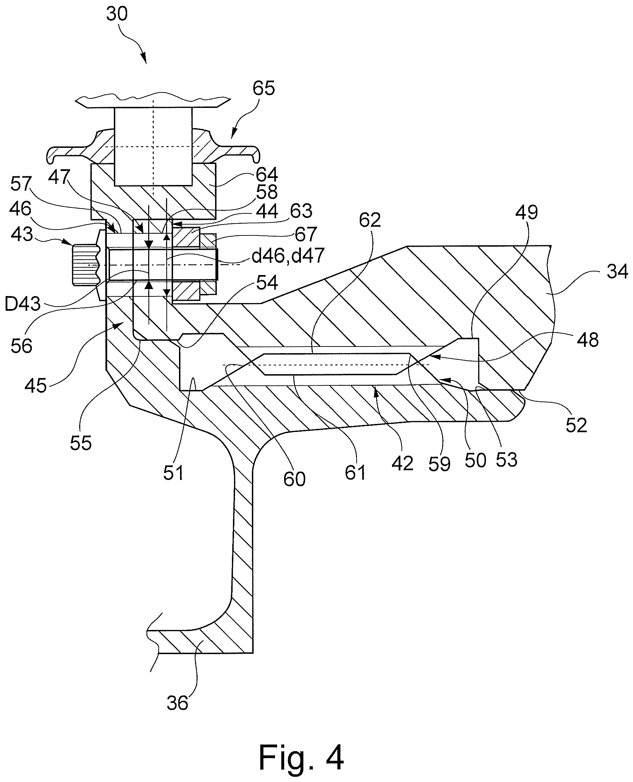

Fig. 4 shows a partial longitudinal sectional view of the engine shaft 36 of the gas turbine engine 10 according to Fig. 1, which is connected to the planet carrier 34 of the planetary gearbox 30 according to Fig. 3 via a bolted spline joint 42. Furthermore, the planet carrier 34 is coupled to the engine shaft 36 in axial direction by bolts 43.

Both the planet carrier or shaft 34 respectively, and the engine shaft 36 are designed with a flange 44, 45. The bolts 43 are guided through holes or bores 46, 47 in the flanges 44, 45 of the shafts 34, 36 are connected in axial direction to each other in the area of their flanges 44, 45 via the bolts 43.

A spline shaft profile 48 of the planet carrier 34 is formed on a radial inner surface 49 of the planet carrier 34, which is at least partly designed as a hollow shaft. A spline shaft profile 50 of the shaft 36, which is engaged with the spline shaft profile 48 of the planet carrier 34, is provided on an outer surface 51 of the shaft 36.

In addition, the planet carrier 34 and the shaft 36 are in contact with each other in the area of contact surfaces 52 and 53 or 54 and 55 respectively. The contact surfaces 52, 53 and 54, 55 are facing each other in radial direction and are formed on the shafts 34, 36 in the axial extension of the spline joint 42 before and after the spline joint 42.

Outer diameters D43 of the bolts 43 and inner diameters d46, d47 of the holes 46, 47 or bores of the flanges 44, 45, through which the bolts 43 are guided through the flanges 44, 45, are matching to each other in such a way that outer surfaces 56 of the bolts 43 and inner surfaces 57, 58 of the bores 46, 47 are at least circumferentially spaced apart to each other when flanks 59, 60 of the spline shaft profiles 48, 50 of the shafts 34, 36 are in contact to each other. Such distance between the adjacent bolts and bores surfaces is given in both movement directions, i.e. if torque is applied in "+" or "-".

A relationship between the number of bolts 43 and the number of spline teeth 61, 62 of the spline shaft profiles 48, 50 of the shafts 34, 36 is such that multiple circumferential positions between planet carrier, i.e. shaft 34, and the shaft 36 are possible at assembly. Moreover, anti-score plates 63 are provided which are fixed by the bolts 43 and nuts 67.

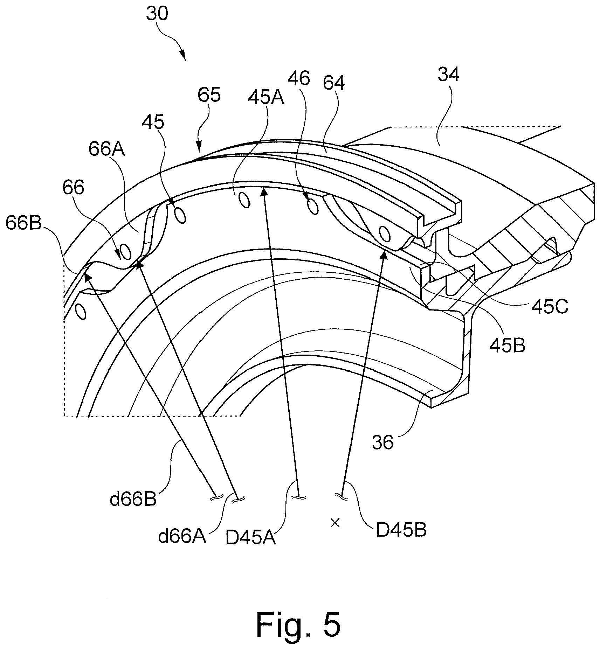

As shown in more detail in Fig. 5 some bolts 43 are used to fasten a bearing inner ring 64 of a bearing 65 to the flange 44 of the planet carrier 34. An outer diameter of the flange 45 of the shaft 36 varies in circumferential direction. In addition, an inner diameter of the bearing inner ring 64 varies in the circumferential direction.

The flange 45 of the engine shaft 36 has alternately in circumferential direction areas 45A with larger outer diameters D45A and areas 45B with smaller outer diameters D45B. Therefore, the outer side 45C of the flange 45 is wave-shaped in circumferential direction. This makes it possible to axially arrange a wave-shaped inner flange 66 of the inner bearing ring 64 in the same plane as the flange 45 of the engine shaft 36. The flange 66 of the inner bearing ring 64 comprises areas 66A whose inner diameters d66A are smaller than inner diameters d66B of adjacent areas 66B of the flange 66. The areas 66B of the flange 66 are arranged in the areas 45B of the flange 45 of the engine shaft 36 whose outer diameters D45B are smaller than the inner diameters d66B of the areas 66B.

It will be understood that the invention is not limited to the embodiments above-described and various modifications and improvements can be made without departing from the concepts described herein. Except where mutually exclusive, any of the features may be employed separately or in combination with any other features and the disclosure extends to and includes all combinations and subcombinations of one or more features described herein.

### Parts list

- 9: principal rotational axis
- 10: engine
- 11: core
- 12: air intake
- 14: low pressure compressor
- 15: high pressure compressor
- 16: combustion equipment
- 17: high-pressure turbine
- 18: bypass exhaust nozzle
- 19: low pressure turbine
- 20: core exhaust nozzle
- 21: nacelle
- 22: bypass duct
- 23: propulsive fan
- 24: stationary supporting structure
- 25: offset outlet
- 26: shaft
- 27: interconnecting shaft
- 28: sun gear
- 29: offset outlet
- 30: epicyclic gearbox
- 31: auxiliary gearbox
- 32: planet gears
- 34: planet carrier, shaft
- 36: engine shaft
- 38: ring gear
- 40: linkage
- 42: spline joint
- 43: bolts
- 44: flange of the planet carrier
- 45: flange of the shaft 36
- 45A, 45B: areas of the flange 45
- 45C: outer side of the flange 45
- 46, 47: hole, bore
- 48: spline shaft profile of the planet carrier
- 49: radial inner surface of planet carrier
- 50: spline shaft profile of the shaft
- 51: outer surface of the shaft
- 52 to 55: contact surface
- 56: outer surface of the bolts
- 57, 58: inner surface of the holes
- 59, 60: flanks
- 61, 62: spline teeth
- 63: anti-score plates
- 64: bearing inner ring
- 65: bearing
- 66: flange of the bearing inner ring
- 66A, 66B: areas of the flange 66
- 67: nuts
- A: core airflow
- B: bypass airflow
- D43: outer diameter of the bolts
- D45A, D45B: outer diameter of the flange 45
- d46, d47: inner diameters of the holes 46, 47
- d66A, d66B: inner diameters of the areas of the flange 66

## Claims

1. A gas turbine engine (10) for an aircraft comprising:
at least one turbine (17, 19),
at least one compressor (14, 15),
at least one fan (23);
a gearbox (30), in particular a planetary gearbox, comprising a gear shaft (34), in particular a planetary gear shaft, which is coupled by a spline joint (42) to at least one engine shaft (36), which engine shaft (36) is connected to the turbine (17, 19), the compressor (14, 15) and/or the fan (23); and
the gear shaft (34) is coupled to the engine shaft (36) in axial direction by bolts (43).

2. A gas turbine engine according to claim 1, wherein
both the gear shaft (34) and the engine shaft (36) are designed with at least one flange (44, 45), whereby the bolts (43) are guided through holes (46, 47) in the flanges (44, 45), and the shafts (34, 36) are connected to each other in the area of their flanges (44, 45) via the bolts (43).

3. A gas turbine engine according to claim 1 or 2, wherein
the gear shaft (34) is a ring gear, a sun gear and/or a planet carrier.

4. A gas turbine engine according to one of the preceding claims, wherein
a spline shaft profile (48) of the gear shaft (34) is formed on a radial inner surface (49) of the gear shaft (34) which is at least partly designed as a hollow shaft, and a spline shaft profile (50) of the engine shaft (36) which is engaged with the spline shaft profile (48) of the gear shaft (34), is provided on an outer surface (51) of the shaft (36).

5. A gas turbine engine according to one of the preceding claims, wherein
a spline shaft profile of the engine shaft is formed on a radial inner surface of the shaft, which is at least partly designed as a hollow shaft, and a spline shaft profile of the gear shaft which is engaged with the spline shaft profile of the engine shaft, is provided on an outer surface of the gear shaft.

6. A gas turbine engine according to one of the preceding claims, wherein
the gear shaft (34) and the engine shaft (36) are in contact with each other in the area of contact surfaces (52 to 55) facing each other in radial direction, whereby the contact surfaces (52 to 55) are formed on the shafts (34, 36) in the axial extension of the spline shaft connection before and after the spline joint (42).

7. A gas turbine engine according to one of the preceding claims, wherein
outer diameters (D43) of the bolts (43) and inner diameters (d46, d47) of holes (46, 47) of the flanges (44, 45), through which the bolts (43) are guided through the flanges (44, 45), are matching to each other in such a way that outer surfaces (56) of the bolts (43) and inner surfaces (57, 58) of the holes (46, 47) are at least circumferentially spaced apart to each other when flanks (59, 60) of the spline shaft profiles (48, 50) of the shafts (34, 36) are in contact to each other.

8. A gas turbine engine according to one of the preceding claims, wherein
a relationship between the number of bolts (43) and the number of spline teeth (61, 62) of the spline shaft profiles (48, 50) of the shafts (34, 36) is such that multiple circumferential positions between the gear shaft (34) and the shaft (36) are possible at assembly.

9. A gas turbine engine according to one of the preceding claims, wherein anti-score plates (63) are provided, which are fixed by nuts (67) and the bolts (43).

10. A gas turbine engine according to one of the preceding claims, wherein
some bolts (43) are used to fasten a bearing inner ring (64) to the flange (45) of the shaft (36) and/or to the flange (44) of the gear shaft (34).

11. A gas turbine engine according to one of the preceding claims, wherein
an outer diameter (D45A, D45B) of the flange (45) of the engine shaft (36) and/or of the flange (44) of the gear shaft (34) varies at least approximately sinusoidally in circumferential direction.

12. A gas turbine engine according to claim 10 or 11, wherein
an inner diameter (d66A, d66B) of a flange (66) of the bearing inner ring (64) varies at least approximately sinusoidally in the circumferential direction.

13. A gas turbine engine according to one of the preceding claims, wherein
at least one shaft (26, 27) is provided, which is connecting the turbine (17, 19) directly to the compressor (14, 15).

14. A gas turbine engine according to claim 13, wherein
an engine core (11) comprises the at least one turbine (17, 19), the at least one compressor (14, 15), and the at least one shaft (26, 27) connecting the turbine (17, 19) to the compressor (14, 15);
the fan (23) is located upstream of the engine core (11) and is comprising a plurality of fan blades;
the planetary gearbox (30) receives an input from the shaft (26), and outputs drive to the fan (23) so as to drive the fan (23) at a lower rotational speed than the shaft (26).

15. The gas turbine engine according to claim 13 or 14, wherein
the turbine is a first turbine (19), the compressor is a first compressor (14), and the shaft is a first core shaft (26);
the engine core (11) further comprises a second turbine (17), a second compressor (15), and a second core shaft (27) connecting the second turbine (17) to the second compressor (15); and
the second turbine (17), the second compressor (15), and the second core shaft (27) are arranged to rotate at a higher rotational speed than the first core shaft (26).
